# FASCICULE DE BREVET EUROPEEN

(11) **EP 3 538 313 B1**
(45) Date de publication et mention de la délivrance du brevet: **30.08.2023**
(21) Numéro de dépôt: 17801411.4
(22) Date de dépôt: 10.11.2017
(51) Int. Cl.: B23K 20/06, B23K 101/36, B23K 103/10, B23K 103/12, B23K 101/38

(54) **PROCÉDÉ DE SOUDAGE PAR IMPULSION MAGNÉTIQUE D'UN EMPILEMENT DE FEUILLETS**
VERFAHREN ZUM MAGNETIMPULSSCHWEISSEN EINES BLECHSTAPELS
METHOD FOR MAGNETIC PULSE WELDING OF A STACK OF SHEETS

(30) Priorité: 14.11.2016 FR 1660982
(43) Date de publication de la demande: 18.09.2019
(73) Titulaire: ADM28 France, 31100 Toulouse (FR)
(72) Inventeur: KASHANI, Mehrdad, Kashiwa Chiba 277-0945 (JP); BEN DAVID, Ori, 6311507 Tel Aviv (IL); SHRIBMAN, Victor, 5528601 Kiryat Ono (IL)
(74) Mandataire: Ipside
(86) Numéro de dépôt international: PCT/EP2017/078943
(87) Numéro de publication internationale: WO 2018/087322

(56) Documents cités:
- DE-A1-102014 223 138
- JP-A- 2003 117 662
- JP-A- 2015 089 560

## Description

### Domaine de l'invention

La présente invention s'inscrit dans le domaine du soudage, et plus particulièrement le domaine du soudage par impulsion magnétique, pour l'assemblage de pièces entre elles de manière permanente. La présente invention porte notamment sur un procédé de soudage d'empilement de feuillets en matériau métallique. Un tel procédé et un tel article sont décrits dans le document JP 2015 089560 A, où un contact direct et une soudure permanente entre les plaques ne sont pas atteints.

### Etat de la technique

De nos jours, il existe un besoin croissant dans l'industrie, notamment dans le domaine automobile, pour des articles formés à partir de l'empilement de plusieurs dizaines de feuillets en matériau métallique compris entre deux plaques, en matériau métallique. Chaque feuillet présente une faible épaisseur, généralement de l'ordre de 0.01-0.02 mm. Chaque plaque présente une forte épaisseur, généralement de l'ordre de 0.2-0.5 mm. De tels articles sont notamment destinés à la constitution de batteries électriques au lithium-ion.

La difficulté de réalisation de ces articles réside dans l'exigence d'assurer une bonne conductivité électrique entre ces différents feuillets et les plaques.

Actuellement, les techniques utilisées pour assembler ces feuillets et les plaques sont le soudage par ultrasons et le soudage laser. La soudure entre deux pièces est réalisée grâce à la chaleur générée à l'interface entre les deux pièces.

Bien que ces techniques d'assemblage soient rapides et économiques, elles présentent certains inconvénients.

Ces techniques, d'une part, ne permettent pas de compresser suffisamment les feuillets entre eux, et d'autre part, peuvent causer des échauffements ponctuels au niveau des feuillets pouvant conduire à la création de trous détériorant la qualité de la soudure finale et en conséquence diminuant la conductivité électrique de l'ensemble.

### Exposé de l'invention

La présente invention vise à remédier aux inconvénients précités.

La présente invention a notamment pour but d'apporter une solution efficace permettant d'assembler des feuillets métalliques de faible épaisseur, tout en assurant la conductivité électrique de l'article obtenu.

Des objectifs supplémentaires de l'invention sont que ce procédé est simple et rapide à mettre en oeuvre.

A cet effet, il est proposé par la présente invention un procédé de soudage par impulsion magnétique d'un article comportant un empilement de feuillets en matériau métallique.

Une définition générique du soudage par impulsion magnétique est la réalisation d'une soudure entre deux pièces métalliques par pression l'une contre l'autre au niveau d'une zone de recouvrement, sans apport thermique externe. Le principe d'un tel procédé repose principalement sur l'impact à grande vitesse des pièces grâce à des forces électromagnétiques générées par une bobine.

Le procédé selon l'invention comporte :
- la réalisation, dans une épaisseur de l'empilement, d'au moins une perforation traversante,
- la disposition de deux plaques en matériau métallique de part et d'autre de l'empilement, en formant une zone de recouvrement couvrant la au moins une perforation traversante,
- le positionnement de l'ensemble plaques-empilement en vis-à-vis d'une partie active d'une bobine, de telle sorte qu'une zone de travail de la zone de recouvrement est disposée en regard de ladite partie active de la bobine, ladite zone de travail couvrant la au moins une perforation,
- le soudage de l'ensemble plaques-empilement par impulsion magnétique.

Les plaques sont disposées vis-à-vis de l'empilement de sorte à prendre en sandwich ledit empilement. Les plaques ne comportent pas de perforations en vis-à-vis des perforations traversantes de l'empilement, lorsqu'elles sont positionnées de part et d'autre dudit empilement.

Le soudage de l'ensemble plaques-empilement est réalisé en soumettant la zone de travail à un champ magnétique de la bobine.

Le champ magnétique provenant de la partie active de la bobine exerce, au niveau de la zone de travail, une pression sur la plaque la plus proche de la bobine.

Une pression s'exerce donc sur une des plaques, dite première plaque, et vient la plaquer contre le feuillet directement en contact avec ladite plaque. Ce feuillet vient à son tour se plaquer contre un feuillet attenant, et ainsi de suite jusqu'au dernier feuillet de l'empilement. Ce dernier feuillet vient quant à lui se plaquer contre l'autre plaque, dite seconde plaque.

Au niveau de la au moins une perforation traversante, cette pression s'exerce sur la première plaque et vient la plaquer contre la seconde plaque garantissant une soudure permanente entre les deux plaques. Par plaquer contre la seconde plaque, on entend que la première plaque vient percuter la seconde plaque. En d'autres termes, au niveau de la au moins une perforation traversante, il y a contact direct entre la première plaque et la seconde plaque. La soudure entre les deux plaques, réalisée dans la perforation traversante, présente en fait la forme d'une soudure annulaire au niveau de la périphérie de ladite perforation.

Ainsi, lorsque la zone de travail est soumise au champ magnétique généré par la bobine assurant le soudage par pression, les deux plaques viennent s'appliquer étroitement, au niveau de la au moins une perforation traversante, l'une contre l'autre par mise en vitesse et déformation de la plaque la plus proche de la bobine en direction de l'autre plaque, emprisonnant les feuillets.

Il est également possible d'exercer une pression simultanément sur les deux plaques.

Un tel procédé permet de souder les deux plaques entre elles dans la au moins une perforation traversante, ce qui permet de maintenir les feuillets en place et de limiter avantageusement le délaminage ultérieur des feuillets.

Un tel procédé permet également d'améliorer la conductivité électrique de l'article grâce d'une part au contact direct entre les deux plaques et d'autre part au contact des feuillets avec la première plaque à la périphérie des perforations traversantes.

Un avantage d'un tel procédé de soudage par impulsion magnétique réside également dans le fait que l'assemblage des pièces formant l'article, c'est à dire les deux plaques et les feuillets, est effectué à l'état solide, ce qui permet de s'acquitter de tous les problèmes connus du soudage classique impliquant la fusion des matériaux. Les pertes d'énergie sont ainsi minimales et en conséquence les pièces à souder constituant l'article chauffent peu. L'absence de fusion dans les pièces durant le soudage permet ainsi d'assembler des matériaux ayant un point de fusion différent.

Ainsi, il est possible par exemple d'assembler des plaques en cuivre, qui est un très bon conducteur électrique, et des feuillets en aluminium.

Selon des modes de mise en oeuvre particuliers, le procédé selon l'invention répond en outre aux caractéristiques suivantes, mises en oeuvre séparément ou en chacune de leurs combinaisons techniquement opérantes.

Dans des modes de mises en oeuvre particuliers de l'invention, pour améliorer le contact entre les feuillets et les plaques, au moins une perforation traversante, de préférence toutes, est réalisée sous la forme d'un tronc de cône, par exemple de révolution ou oblique.

Dans une variante de mise en oeuvre, dans le cas où une pression est exercée simultanément sur les deux plaques, au moins une perforation traversante, de préférence toutes, est réalisée sous la forme de deux troncs de cône inversés raccordés l'un à l'autre au niveau de leur petite base.

Dans des modes de mises en oeuvre particuliers de l'invention, pour allonger la soudure entre les plaques dans une perforation, ladite perforation traversante est réalisée sous la forme d'un cylindre de section transversale elliptique.

Dans des modes de mises en oeuvre particuliers de l'invention, la perforation traversante est réalisée de sorte à présenter un axe moyen orienté sensiblement perpendiculairement à une face de l'une des deux plaques.

Dans une variante de mise en oeuvre, la perforation traversante est réalisée de sorte à présente un axe moyen incliné par rapport à une normale à une face de l'une des deux plaques, au niveau de ladite perforation traversante.

L'invention est également relative à un article comportant un empilement de feuillets en matériau métallique entre deux plaques en matériau métallique. L'empilement comporte, dans son épaisseur, une perforation traversante. L'empilement est compris entre les deux plaques, au niveau d'une zone de recouvrement couvrant la perforation traversante. L'ensemble plaques-empilement est soudé de manière irréversible, au niveau d'une partie de la zone de recouvrement couvrant la perforation. L'ensemble plaques-empilement est soudé par impulsion magnétique. Les deux plaques sont soudées entre elles au niveau de la perforation traversante.

Préférentiellement, l'article est obtenu à partir du procédé de soudage conforme à au moins l'un des modes de mise en oeuvre.

L'article obtenu est avantageux en ce qu'il permet, grâce à un soudage des deux plaques entre elles au niveau de la perforation, aux feuillets de rester en position entre les plaques sans risque de délaminage ultérieur.

Grâce d'une part au contact direct entre les deux plaques et d'autre part au contact des feuillets avec la première plaque à la périphérie des perforations traversantes, la conductivité électrique de l'article est assurée.

Suivant des modes de réalisation préférés, l'invention répond en outre aux caractéristiques suivantes, mises en oeuvre séparément ou en chacune de leurs combinaisons techniquement opérantes.

Selon des modes particuliers de l'invention, la perforation traversante se présente sous la forme d'un tronc de cône, par exemple de révolution ou oblique. Un tel mode de réalisation permet avantageusement d'améliorer le contact entre les feuillets et les plaques.

Selon des modes particuliers de l'invention, la perforation traversante dans l'empilement se présente sous la forme d'un cylindre de section ovale.

Selon des modes particuliers de l'invention, l'empilement comporte deux perforations traversantes, de même section transversale et de même dimension, lesdites perforations étant espacées entre elles de la dimension d'une perforation traversante.

### Présentation des figures

L'invention sera mieux comprise à la lecture de la description ci-après faite en référence aux dessins annexés :
La figure 1 représente schématiquement une vue latérale d'un article comportant un empilement de feuillets positionné dans un dispositif de soudage adapté pour le soudage par impulsion magnétique en vue de son soudage,
La figure 2 illustre une vue en section du dispositif de soudage de la figure 1,
Les figures 3 et 4 représentent des variantes de formes des perforations dans l'épaisseur de l'empilement de feuillets,
Les figures 5 et 6 représentent une vue de dessus d'un feuillet illustrant des variantes de section transversales des perforations,
La figure 7 représente une photographie d'un article, au niveau de la zone de recouvrement, après l'opération de soudage par impulsion magnétique.

### Description détaillée d'un mode de réalisation de l'invention

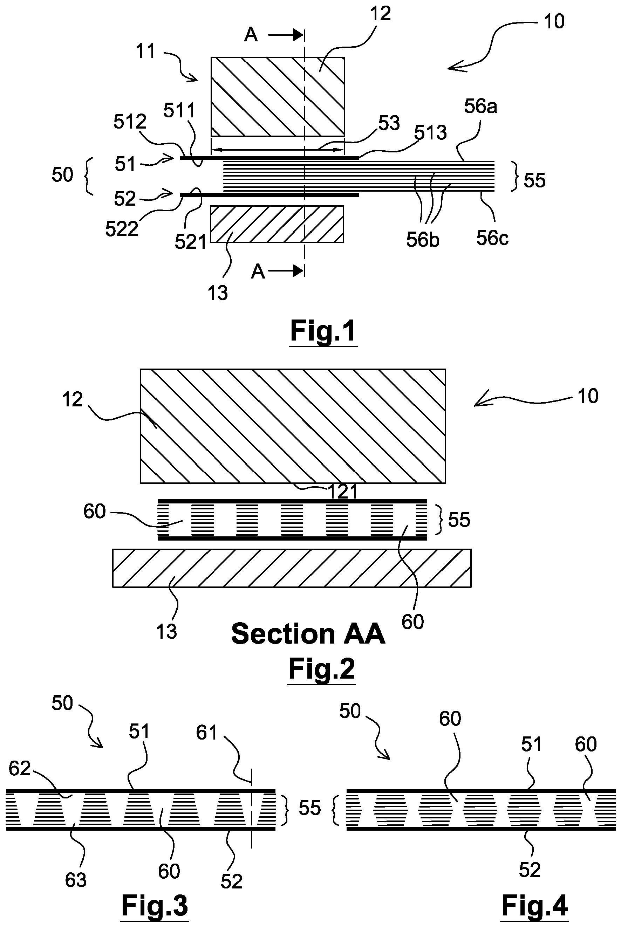

La figure 1 décrit schématiquement un dispositif de soudage 10 adapté pour le soudage par impulsion magnétique d'un article 50 comportant au moins un empilement 55 de feuillets 56.

Les différentes pièces formant l'article 50 peuvent être de forme plate, ou en variante, de forme tubulaire.

Par forme plate, on entend que les pièces ont au moins une surface de forme plane, ou sensiblement plane, sur toute ou partie de leur longueur, au moins au niveau d'une zone de recouvrement des pièces entre elles.

Par forme tubulaire, on entend que les pièces ont la forme d'un tube sur toute ou partie de leur longueur, au moins au niveau d'une zone de recouvrement des pièces entre elles.

L'invention est ici décrite de manière détaillée dans le cas du soudage d'un empilement 55 de feuillets 56 de forme plate.

Le dispositif de soudage 10 comporte de manière connue une bobine 11, une unité de stockage (non représentée) et un ou plusieurs commutateurs (non représenté).

L'unité de stockage est configurée pour et destinée à emmagasiner une forte énergie, par exemple de l'ordre de quelques dizaines de kilojoules (kJ).

Dans un exemple préféré de réalisation, l'unité de stockage est une batterie de condensateurs de décharge.

La bobine 11 est quant à elle configurée pour et destinée à créer un champ magnétique concentré dans un espace délimité.

### La bobine

La bobine 11 comporte un corps 12. Ce corps 12 est réalisé dans un matériau présentant des caractéristiques spécifiques en termes, d'une part, de résistance mécanique à la déformation plastique et d'autre part de conductivité électrique élevée pour y faire circuler un courant de très forte intensité, de l'ordre de quelques centaines de milliers d'Ampères.

Dans un exemple préféré de réalisation, le matériau du corps est en acier, de préférence, un acier haute résistance.

Lorsque le(s) commutateur(s) se ferme(nt), le corps 12 est relié à l'unité de stockage, et un courant de forte intensité circule à travers lui produisant un champ magnétique.

La bobine 11 est conçue pour que la densité du courant dans une zone de ladite bobine, soit suffisante pour satisfaire les conditions de soudage. Cette zone est appelée partie active 121.

Pour rappel, pour que le soudage ait lieu, plusieurs paramètres doivent être pris en compte, notamment l'angle de collision et la vitesse de collision. Ces deux paramètres sont liés à l'agencement relatif initial de la bobine et des pièces à souder, aux matériaux des pièces et au signal de courant utilisé. Ces paramètres sont connus de l'homme du métier et ne seront pas détaillés ici.

Le courant est concentré, dans la partie active, sur une couche délimitée par une partie active et d'épaisseur correspondant à l'épaisseur de peau.

Dans l'exemple non limitatif d'une bobine réalisée en acier, l'épaisseur de peau est de l'ordre de quelques millimètres pour une fréquence de quelques dizaines de kHz.

Pour l'application souhaitée, à savoir le soudage d'un empilement 55 de feuillets, il est nécessaire de concentrer le champ magnétique dans une épaisseur de peau très fine, par exemple de l'ordre de 0,3 mm pour une plaque en cuivre. Pour concentrer le champ magnétique dans une telle épaisseur de peau, la fréquence générée est au moins supérieure à 25 kHz.

Dans un autre exemple où il est souhaité concentrer le champ magnétique dans une épaisseur de peau inférieure à 0,1 mm, la fréquence générée est au moins supérieure à 70 kHz.

### L'article à souder

L'article 50 à souder comporte un empilement 55 de feuillets et deux plaques, dite première plaque 51 et seconde plaque 52.

L'empilement 55 comporte une superposition de feuillets. Il comporte un premier feuillet 56ₐ, un dernier feuillet 56_{c}, et entre ces deux feuillets, des feuillets intermédiaires 56_{b}.

L'empilement 55 est pris en sandwich entre tout ou partie des deux plaques 51, 52. En d'autres termes, tout ou partie d'une face interne 511 de la première plaque 51 est disposée contre le premier feuillet 56ₐ et tout ou partie d'une face interne 521 de la seconde plaque 52 est disposée contre le dernier feuillet 56_{c}.

L'empilement 55 et les deux plaques 51, 52 sont destinés à être disposés les uns sur les autres, de sorte à former une zone commune de superposition, dite zone de recouvrement 53, puis à être soudées au niveau de tout ou partie de ladite zone de recouvrement par la bobine 11.

L'empilement 55 et les deux plaques 51, 52 sont positionnés les uns sur les autres de manière sensiblement parallèle, au moins au niveau de la zone de recouvrement 53.

De préférence, la zone de recouvrement 53 est située au niveau d'une extrémité d'au moins une plaque, par exemple une extrémité 513 de la première plaque 51.

Chaque plaque 51, 52 peut présenter une épaisseur comprise par exemple entre 200 et 400 µm.

Chaque plaque 51, 52 est de préférence réalisée dans un matériau métallique.

Dans un exemple préféré non limitatif, les plaques 51, 52 sont en aluminium.

Dans un autre exemple non limitatif, les plaques 51, 52 sont en cuivre.

Dans un autre mode de réalisation, les deux plaques 51, 52 sont réalisées dans des matériaux métalliques différents.

Dans l'exemple illustré par les figures 1 à 4, l'empilement 55 comporte neuf feuillets, sans que ce soit limitatif de l'invention.

Bien que les feuillets sont illustrées sur les figures et décrits au nombre de 9, le nombre de ces feuillets n'est pas limité à celui décrit et illustré. Ainsi, il est possible, sans se départir du cadre de l'invention, de réaliser un empilement 55 comportant moins d'une dizaine de feuillets ou plusieurs dizaines de feuillets.

Préférentiellement, l'empilement 55 comporte au moins 40 feuillets.

Chaque feuillet présente par exemple une épaisseur de 20 µm.

Chaque feuillet est de préférence réalisé dans un matériau métallique.

Dans un exemple préféré non limitatif, les feuillets sont en aluminium.

Il est également envisageable de réaliser un empilement 55 à partir de feuillets réalisés dans des matériaux métalliques différents.

L'empilement 55 présente, dans son épaisseur, et par extension chaque feuillet, une pluralité de perforations traversantes 60. Dans la suite de la description, on dénommera une perforation traversante, perforation.

Il est bien entendu évident que l'empilement 55 ne peut comporter, dans son épaisseur, qu'une seule perforation 60. La description ci-après s'applique également à ce cas.

Les perforations 60 sont positionnées dans l'empilement 55 de telle sorte que lorsque les deux plaques 51, 52 et l'empilement 55 sont assemblés, les perforations 60 sont situées dans la zone de recouvrement 53.

Lorsque les deux plaques 51, 52 entre lesquelles est positionné l'empilement 55 sont en position avec ledit empilement en vue de leur soudage, lesdites deux plaques ne présentent pas de perforations en vis-à-vis des perforations 60 réalisées dans l'empilement, comme illustré sur les figures 2 à 4.

Dans un exemple de réalisation, les perforations 60 sont sensiblement alignées. Les figures 2 à 4 illustrent une section de l'article 50, au niveau d'une ligne de perforations 60, avant l'opération de soudage.

Dans l'exemple illustré sur les figures 2 à 4, les perforations 60 sont au nombre de six.

Bien que les perforations 60 sont illustrées sur les figures et décrites au nombre de six, le nombre de ces perforations n'est pas limité à celui décrit et illustré. Ainsi, il est possible, sans se départir du cadre de l'invention, de réaliser un empilement 55 avec un nombre de perforations inférieur ou supérieur à 6.

Le nombre de perforations 60 est évidemment fonction des dimensions de l'empilement 55.

Le nombre, la forme et la dimension des perforations est choisi en fonction des dimensions de la zone de recouvrement et/ou de l'épaisseur de l'empilement.

Dans un mode de réalisation, illustré sur les figures 2 à 4, une perforation 60, de préférence toutes les perforations, est réalisée dans l'empilement 55 de sorte que ladite perforation présente, quelque soit sa forme, un axe moyen 61 orienté sensiblement perpendiculairement à la face interne de la première 51, ou seconde plaque 52, au niveau de ladite perforation.

Dans un autre mode de réalisation, l'axe moyen de la perforation 60 est incliné sensiblement par rapport à un axe perpendiculaire à la face interne de la première, ou seconde, plaque, au niveau de ladite perforation.

Dans un exemple de réalisation de perforations, comme illustré sur la figure 2, les perforations 60 présentent une forme cylindrique.

Par forme cylindrique, on entend une forme de section constante entre la face interne 511 de la première plaque 51 vers la face interne 521 de la seconde plaque 52.

La forme cylindrique englobe toute forme de section transversale, telle que par exemple une section elliptique, circulaire, carrée, rectangulaire ou polygonale.

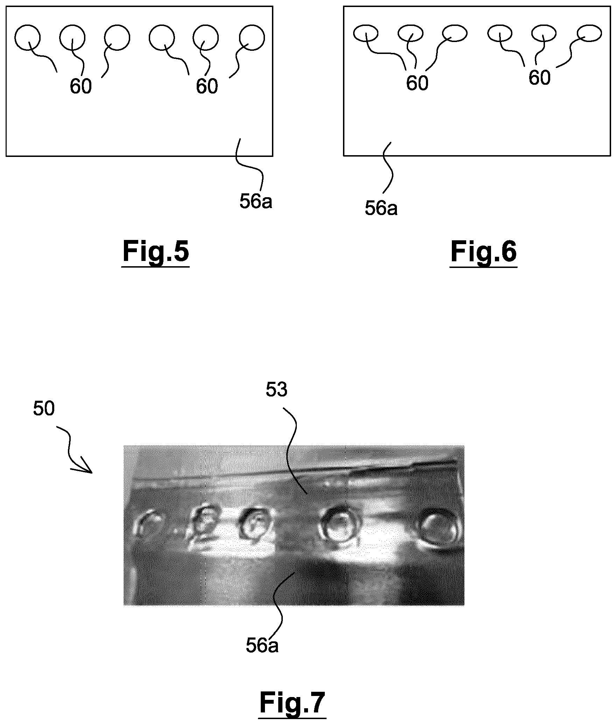

Dans une forme de réalisation, les perforations 60 présentent une forme cylindrique, de section transversale circulaire. La figure 5 illustre une vue de dessus d'un feuillet, par exemple le premier feuillet 56ₐ, comportant 6 perforations de section transversale circulaire.

Dans une autre forme de réalisation, les perforations 60 présentent une forme cylindrique, de section transversale elliptique. La figure 6 illustre une vue de dessus d'un feuillet, par exemple le premier feuillet 56ₐ, comportant 6 perforations de section transversale elliptique.

Dans une variante de réalisation de perforations, comme illustré sur la figure 3, les perforations 60 présentent une forme sensiblement en tronc de cône, avec une grande base 62 située du coté de la face interne 511 de la première plaque 51 et une petite base 63 située du coté de la face interne 521 de la seconde plaque 52.

Par forme sensiblement en tronc de cône, on entend une forme de section transversale monotone décroissante ou croissante, ici décroissante de la face interne 511 de la première plaque 51 vers la face interne 521 de la seconde plaque 52.

L'expression « tronc de cône » utilisée pour décrire la forme de la perforation est à prendre au sens général englobant toute forme de section du tronc de cône, telle que par exemple une section elliptique, circulaire, carrée, rectangulaire ou polygonale.

Le tronc de cône peut être un tronc de cône de révolution ou un tronc de cône oblique.

Dans une variante améliorée de réalisation de perforations, les perforations 60 présentent la forme de deux troncs de cône creux inversés raccordés l'un à l'autre au niveau de leur petite base, de sorte à présenter une forme de diabolo. Un premier tronc de cône présente une grande base située du coté de la face interne 511 de la première plaque 51. Un second tronc de cône présente une grande base située du coté de la face interne 521 de la seconde plaque 52. De préférence, les deux troncs de cône sont coaxiaux.

Dans une forme de réalisation, les deux troncs de cône sont de mêmes dimensions.

Dans une autre forme de réalisation, les deux troncs de cône sont asymétriques.

La présente invention ne se limite pas à un empilement 55 avec des performations 60 présentant une même forme. Un empilement 55 peut comporter des perforations 60 présentant des formes différentes. L'homme du métier est en mesure d'adapter l'invention à des formes et agencements non décrits.

Dans l'exemple des figures 2 à 6, deux perforations 60 attenantes sont espacées deux à deux d'une distance équivalente à une dimension maximale de la section transversale d'une perforation.

Dans l'exemple de la figure 5, les perforations 60, de même section transversale circulaire, sont toutes espacées deux à deux d'une distance sensiblement égale au diamètre des perforations.

Préférentiellement, les perforations 60 présentent un diamètre de 50 mm et sont espacées entre elles de 50 mm.

Un exemple de procédé de soudage de l'article 50 est à présent décrit. Le procédé de soudage est préférentiellement réalisé à partir du dispositif de soudage 10 préalablement décrit.

Dans une étape préalable, les perforations 60 sont réalisées dans l'empilement 55.

Les perforations 60 sont réalisées dans l'empilement à l'endroit où une soudure par impulsion magnétique est souhaitée sur l'article.

Dans un mode de mise en oeuvre, les feuillets 56 sont préalablement empilés, puis les perforations sont réalisées simultanément pour tous les feuillets.

Dans un autre mode de mise en oeuvre, les perforations sont réalisées pour chaque feuillet puis les feuillets sont empilés de sorte à aligner les axes moyens 61 des perforations 60.

Dans un exemple de mise en oeuvre, les perforations 60 sont réalisées par usinage, par exemple par perçage ou par poinçonnage.

Dans une étape ultérieure, les pièces formant l'article à souder, c'est-à-dire l'empilement 55 et les deux plaques 51, 52, sont assemblés.

Les deux plaques 51, 52 sont disposées de part et d'autre de l'empilement 55, en formant la zone de recouvrement 53 couvrant au moins les perforations 60 préalablement réalisées.

La face interne 511 de la première plaque 51 est disposée contre le premier feuillet. La face interne 521 de la seconde plaque 52 est disposée contre le dernier feuillet.

Le procédé comporte ensuite une étape de positionnement de l'ensemble plaques-empilement dans le dispositif de soudage 10.

L'empilement 55 et les deux plaques 51, 52 sont avantageusement positionnés au niveau de la bobine 11 de sorte que tout ou partie de la zone de recouvrement 53 soit en vis-à-vis de la partie active 121 de ladite bobine.

La zone de recouvrement 53 en vis-à-vis de la partie active 121 de la bobine est dénommée zone de travail. La zone de travail couvre les perforations 60.

Dans l'exemple non limitatif des figures 1 et 2, la première plaque 51 est la pièce la plus proche de la partie active 121 de la bobine. Une face externe 512 de la première plaque 51 est disposée en vis-à-vis de la partie active 121 de la bobine. Une face externe 522 de la seconde plaque 52 est disposée en vis-à-vis d'une cale 13.

Les deux plaques 51, 52 et l'empilement 55 sont maintenues, à proximité de la partie active 121 de la bobine 11, de manière sensiblement parallèles entre eux, au moins au niveau de la zone de recouvrement 53, par des moyens de fixation (non représentés sur les figures).

A l'issue de ces étapes, l'article est prêt à être soudé.

L'ordre de mise en oeuvre des deux étapes précédentes n'est pas imposé et, suivant le procédé, peuvent être réalisées dans l'ordre inverse de l'ordre décrit ou réalisées simultanément sans modifier le résultat desdites étapes.

Le procédé comporte ensuite une étape de soudage par impulsion magnétique.

Lorsque le(s) commutateur(s) 51 se ferme(nt), le corps 12 de la bobine 11 est relié à l'unité de stockage, et un courant de forte intensité circule dans la bobine 11. Le courant génère, dans un espace délimité entre la zone de travail et la partie active 121, un champ magnétique concentré provenant de ladite partie active.

La zone de travail est alors soumise à un champ magnétique de sorte que :
- une pression s'exerce sur la face externe 512 de la première plaque 51 et vient la plaquer étroitement contre le premier feuillet 56ₐ, qui vient à son tour se plaquer étroitement contre le deuxième feuillet et ainsi de suite jusqu'à ce que le dernier feuillet 56_{c} vienne se plaquer étroitement contre la face interne 521 de la seconde plaque 52, en provoquant leur liaison de façon permanente, et
- au niveau des perforations 60, cette pression s'exerce sur la face externe 512 de la première plaque 51 et vient plaquer ladite première plaque étroitement contre la face interne 521 de la seconde plaque 52.

A l'issue de cette étape, l'article 50 est soudé au niveau de la zone de travail. Les deux plaques 51, 52 et l'empilement 55 sont liés entre eux par soudage entre les perforations 60, et les deux plaques 51, 52 sont liées entre elles par soudage dans les perforations 60.

La figure 7 représente à titre illustratif un article après soudage. L'empilement comporte 40 feuillets 56 en aluminium. Les deux plaques sont en aluminium. La zone de recouvrement 53 présente une dimension de 430 mm de longueur et 120 mm de largeur. Les perforations sont cylindriques, de même section transversale circulaire, de diamètre 50 mm, au nombre de 5 et espacées deux à deux de 50 mm.

Le procédé est également adaptable à des pièces tubulaires.

La description ci-avant illustre clairement que par ses différentes caractéristiques et leurs avantages, la présente invention atteint les objectifs fixés. En particulier, elle fournit un procédé de soudage par impulsion magnétique adapté au soudage de pièces comportant un empilement de feuillets.

## Revendications

1. Procédé de soudage par impulsion magnétique d'un article (50) comportant un empilement (55) de feuillets en matériau métallique, le procédé comportant :
- la réalisation, dans une épaisseur de l'empilement (55), d'au moins une perforation traversante (60),
- la disposition de deux plaques, dite première (51) et seconde plaque (52), en matériau métallique de part et d'autre de l'empilement, en formant une zone de recouvrement (53) couvrant la au moins une perforation traversante (60),
- le positionnement de l'ensemble plaques-empilement en vis-à-vis d'une partie active (121) d'une bobine (11), de telle sorte qu'une zone de travail de la zone de recouvrement est disposée en regard de la partie active de la bobine, ladite zone de travail couvrant la au moins une perforation (60),
- la soumission de la zone de travail à un champ magnétique jusqu'à liaison de l'ensemble, pendant laquelle, au niveau de la au moins une perforation (60), une pression s'exerce sur la première plaque (51) et vient la plaquer contre la seconde plaque (52), de sorte qu'il y a contact direct et une soudure permanente entre ladite première plaque et ladite seconde plaque .

2. Procédé de soudage selon la revendication 1 dans lequel une perforation traversante (60) est réalisée sous la forme d'un tronc de cône.

3. Procédé de soudage selon la revendication 1 dans lequel une perforation traversante (60) est réalisée sous la forme d'un cylindre de section elliptique.

4. Procédé de soudage selon l'une des revendications précédentes dans lequel la perforation traversante (60) est réalisée de sorte à présenter un axe moyen orienté (61) sensiblement perpendiculairement à une face de l'une des deux plaques.

5. Procédé de soudage selon l'une des revendications 1 à 3 dans lequel la perforation traversante (60) est réalisée de sorte à présente un axe moyen (61) incliné par rapport à une normale à une face de l'une des deux plaques, au niveau de ladite perforation traversante.

6. Article (50) comportant un empilement (55) de feuillets en matériau métallique entre deux plaques (51, 52) en matériau métallique, l'empilement comportant, dans son épaisseur, une perforation traversante (60), l'empilement étant compris entre les deux plaques, au niveau d'une zone de recouvrement couvrant la perforation traversante, et l'ensemble plaques-empilement étant soudé de manière irréversible au niveau d'une partie de la zone de recouvrement couvrant la perforation, **caractérisé en ce que** les deux plaques sont soudées entre elles au niveau de la perforation traversante (60).

7. Article selon la revendication 6 dans lequel une perforation traversante (60) se présente sous la forme d'un tronc de cône.

8. Article selon la revendication 6 dans lequel une perforation traversante (60) se présente sous la forme d'un cylindre de section elliptique.

9. Article selon l'une des revendications 6 à 8 comportant deux perforations traversantes (60) de même section transversale et de même dimension, lesdites perforations étant espacées entre elles de la dimension d'une perforation traversante.

## Patentansprüche

1. Verfahren zum Magnetimpulsschweißen eines Artikels (50), der eine Stapelung (55) von Blechen aus metallischem Werkstoff beinhaltet, wobei das Verfahren beinhaltet:
- die Verwirklichung mindestens einer Durchgangsperforation (60) in einer Dicke der Stapelung (55),
- die Anordnung zweier Platten, erste (51) und zweite Platte (52) genannt, aus metallischem Werkstoff beiderseits der Stapelung durch Bilden eines Abdeckbereichs (53), der die mindestens eine Durchgangsperforation (60) abdeckt,
- die Positionierung der Einheit aus Platten-Stapelung gegenüber einem aktiven Teil (121) einer Spule (11), derart, dass ein Arbeitsbereich des Abdeckbereichs auf Höhe des aktiven Teils der Spule angeordnet ist, wobei der Arbeitsbereich die mindestens eine Perforation (60) abdeckt,
- das Unterziehen des Arbeitsbereichs einem Magnetfeld bis zur Verbindung der Einheit, wobei im Bereich der mindestens einen Perforation (60) ein Druck auf die erste Platte (51) ausgeübt wird, und sie gegen die zweite Platte (52) drückt, sodass es zu einem direkten Kontakt und einer dauerhaften Verschweißung zwischen der ersten Platte und der zweiten Platte kommt.

2. Schweißverfahren nach Anspruch 1, wobei eine Durchgangsperforation (60) in Form eines Kegelstumpfes verwirklicht wird.

3. Schweißverfahren nach Anspruch 1, wobei eine Durchgangsperforation (60) in Form eines Zylinders mit elliptischem Querschnitt verwirklicht wird.

4. Schweißverfahren nach einem der vorstehenden Ansprüche, wobei die Durchgangsperforation (60) derart verwirklicht wird, um eine mittlere Achse aufzuweisen, die im Wesentlichen senkrecht zu einer Seite der einen der beiden Platten ausgerichtet (61) ist.

5. Schweißverfahren nach einem der Ansprüche 1 bis 3, wobei die Durchgangsperforation (60) derart verwirklicht wird, um eine mittlere Achse (61) aufzuweisen, die in Bezug zu einer Normalen zu einer Seite der einen der beiden Platten im Bereich der Durchgangsperforation schräggestellt ist.

6. Artikel (50), der eine Stapelung (55) von Blechen aus metallischem Werkstoff zwischen zwei Platten (51, 52) aus metallischem Werkstoff beinhaltet,
wobei die Stapelung in ihrer Dicke eine Durchgangsperforation (60) beinhaltet, wobei die Stapelung zwischen den beiden Platten, im Bereich eines Abdeckbereichs enthalten ist, der die Durchgangsperforation abdeckt, und die Einheit aus Platten-Stapelung auf nicht umkehrbare Art und Weise im Bereich eines Teils des Abdeckbereichs, der die Perforation abdeckt, verschweißt wird, **dadurch gekennzeichnet, dass** die beiden Platten im Bereich der Durchgangsperforation (60) miteinander verschweißt werden.

7. Artikel nach Anspruch 6, wobei sich eine Durchgangsperforation (60) in Form eines Kegelstumpfes darstellt.

8. Artikel nach Anspruch 6, wobei sich eine Durchgangsperforation (60) in Form eines Zylinders mit elliptischem Querschnitt darstellt.

9. Artikel nach einem der Ansprüche 6 bis 8, der zwei Durchgangsperforationen (60) mit einem selben Querschnitt und derselben Abmessung beinhaltet, wobei die Perforationen um die Abmessung einer Durchgangsperforation voneinander beabstandet sind.

## Claims

1. Method for magnetic pulse welding of an item (50) comprising a stack (55) of sheets of metal material, the method comprising:
- making, in a thickness of the stack (55), at least one through perforation (60),
- arranging two plates, called first (51) and second (52) plate, of metal material on either side of the stack, by forming a coverage zone (53) covering the at least one through perforation (60),
- positioning the plate-stack assembly opposite to an active part (121) of a coil (11), so that a working area of the coverage zone is facing the active part of the coil, said working area covering the at least one perforation (60),
- subjecting the working area to a magnetic field until the assembly is joined,
during which, at the at least one perforation (60), a pressure is exerted onto the first plate (51) and presses it against the second plate (52), so that there is a direct contact and permanent weld between said first plate and said second plate.

2. Welding method according to claim 1 wherein a through perforation (60) is made in the form of a cone frustum.

3. Welding method according to claim 1 wherein a through perforation (60) is made in the form of a cylinder with an elliptical cross-section.

4. Welding method according to one of the preceding claims wherein the through perforation (60) is made so as to have a mean axis (61) oriented substantially perpendicular to a face of one of both plates.

5. Welding method according to one of claims 1 to 3 wherein the through perforation (60) is made so as to have a mean axis (61) tilted relative to a normal to a face of one of both plates, at said through perforation.

6. Item (50) comprising a stack (55) of sheets of metal material between two plates (51, 52) of metal material, the stack comprising, in its thickness, a through perforation (60), the stack being comprised between both plates, at a coverage zone covering the through perforation, and the plate-stack assembly being irreversibly welded at a part of the coverage zone covering the perforation, **characterised in that** both plates are welded to each other at said through perforation (60).

7. Item according to claim 6 wherein a through perforation (60) is in the form of a cone frustum.

8. Item according to claim 6 wherein a through perforation (60) is in the form of a cylinder with an elliptical cross-section.

9. Item according to one of claims 6 to 8 comprising two through perforations (60) with the same transverse cross-section and the same dimension, said perforations being spaced apart from each other by the dimension of a through perforation.
